# FASCICULE DE BREVET EUROPEEN

(11) **EP 1 473 187 B1**
(45) Date de publication et mention de la délivrance du brevet: **12.04.2006**
(21) Numéro de dépôt: 04291076.0
(22) Date de dépôt: 26.04.2004
(51) Int. Cl.: B60N 2/46, A47C 7/54

(54) **Siège pour véhicule de transport notamment aérien**
Sitz für Verkehrsmittel, insbesondere Lufttransporte
Seat for transport vehicles, especially air transport

(30) Priorité: 29.04.2003 FR 0305247
(43) Date de publication de la demande: 03.11.2004
(73) Titulaire: Société Industrielle et Commerciale de Matériel Aéronautique, F-36100 Issoudun (FR)
(72) Inventeur: Herault, Patrick, 18160 Saint Hilaire en Lignieres (FR)
(74) Mandataire: Geismar, Thierry

(56) Documents cités:
- EP-A- 0 217 319
- US-A- 3 880 466
- US-A- 5 547 257

## Description

La présente invention concerne un siège pour véhicule de transport, notamment aérien, et plus particulièrement un tel siège comportant une structure de support et au moins un accoudoir comprenant un élément d'appui monté à une extrémité d'un montant dont l'autre extrémité est articulée autour d'un premier axe transversal sur la structure de support entre une position d'utilisation où l'élément d'appui est sensiblement horizontal et une position escamotée vers l'avant où l'élément d'appui est généralement vertical en avant du siège.

Un tel siège est décrit dans le document FR-A-2 233 821. Dans ce document, l'élément d'appui de l'accoudoir est monté rigidement à l'extrémité libre du montant. Il en résulte que, même dans sa position escamotée, l'accoudoir occupe une place importante, en particulier la partie arrière de l'élément d'appui qui, dans cette position, dépasse vers l'avant et vers le haut du bord avant de l'assise du siège.

La présente invention vise à palier cet inconvénient.

Plus particulièrement, l'invention a pour but de réduire l'encombrement de l'accoudoir, notamment lorsqu'il se trouve dans sa position escamotée.

L'invention a également pour but de fournir des moyens de verrouillage particulièrement adaptés à un accoudoir de siège de cabine d'avion transformable d'une version "économique" en une version "affaire".

A cet effet, l'invention a pour objet un siège pour véhicule de transport, notamment aérien, comportant une structure de support et au moins un accoudoir comprenant un élément d'appui monté à une extrémité d'un montant dont l'autre extrémité est articulée autour d'un premier axe transversal sur la structure de support entre une position d'utilisation où l'élément d'appui est sensiblement horizontal et une position escamotée vers l'avant où l'élément d'appui est généralement vertical en avant du siège, caractérisé par le fait que ledit montant est en forme de L avec un premier bras articulé à son extrémité libre sur ledit premier axe et généralement dirigé, lorsque ledit montant est dans sa position d'utilisation, vers l'arrière à partir dudit premier axe et, lorsque ledit montant est dans sa position escamotée, vers l'avant à partir dudit premier axe, et un deuxième bras généralement dirigé, lorsque le montant est dans sa position d'utilisation, vers le haut et, lorsque le montant est dans sa position escamotée, vers le bas, et que ledit élément d'appui est articulé à l'extrémité libre dudit deuxième bras du montant autour d'un deuxième axe transversal.

On entend par "transversal", généralement perpendiculaire au plan de symétrie du siège. On entend respectivement par "avant" et "arrière", la direction regardée par l'occupant du siège et la direction opposée.

La forme particulière du bras et l'articulation de l'élément d'appui sur le bras permettent de réduire considérablement l'encombrement de l'accoudoir en position escamotée.

Dans un mode de réalisation particulier, ledit élément d'appui possède un logement en arrière dudit deuxième axe, apte à recevoir ledit deuxième bras lorsque ledit montant est dans sa position escamotée.

Un tel agencement permet, en encastrant dans l'élément d'appui la partie du montant qui lui est reliée, de diminuer le dépassement vers l'avant de l'accoudoir lorsqu'il est en position escamotée.

Egalement dans un mode de réalisation particulier de l'invention, on prévoit de premiers moyens de verrouillage de l'accoudoir au moins dans la position d'utilisation dudit montant.

Plus particulièrement, lesdits premiers moyens de verrouillage peuvent comprendre des moyens de verrouillage de la partie arrière de l'élément d'appui à ladite structure de support.

Lesdits moyens de verrouillage de la partie arrière de l'élément d'appui à ladite structure de support peuvent comprendre un doigt transversal monté à l'extrémité arrière dudit élément d'appui, et agencé pour coopérer avec une extrémité en forme de crochet d'un premier levier articulé sur ladite structure de support autour d'un troisième axe transversal.

On peut également prévoir un bouton de déverrouillage monté mobile sur ladite structure de support pour déplacer ledit premier levier.

Egalement dans un mode de réalisation particulier de l'invention, on prévoit de seconds moyens de verrouillage de l'accoudoir au moins dans la position escamotée dudit montant.

Plus particulièrement, lesdits seconds moyens de verrouillage peuvent comprendre des moyens de verrouillage dudit élément d'appui sur ledit montant.

Lesdits moyens de blocage peuvent comprendre un logement pour l'extrémité avant dudit élément d'appui, solidaire de ladite structure de support.

Lesdits seconds moyens de verrouillage peuvent comprendre un deuxième levier articulé sur ledit premier bras dudit montant autour d'un quatrième axe transversal et comportant à son extrémité libre un évidemment agencé pour coopérer avec ledit doigt transversal.

Ledit montant peut comporter des passages pour au moins un câble électrique ou de commande mécanique.

Une butée peut être agencée pour bloquer, en position d'utilisation, la rotation de l'élément d'appui autour dudit deuxième axe transversal dans le sens dans le sens de la mise de l'accoudoir en position d'utilisation.

Ladite butée peut être réglable.

On décrira maintenant, à titre d'exemple non limitatif, un mode de réalisation particulier de l'invention, en référence aux dessins schématiques annexés dans lesquets :
- la figure 1 est une vue en perspective d'un accoudoir selon l'invention en position d'utilisation ;

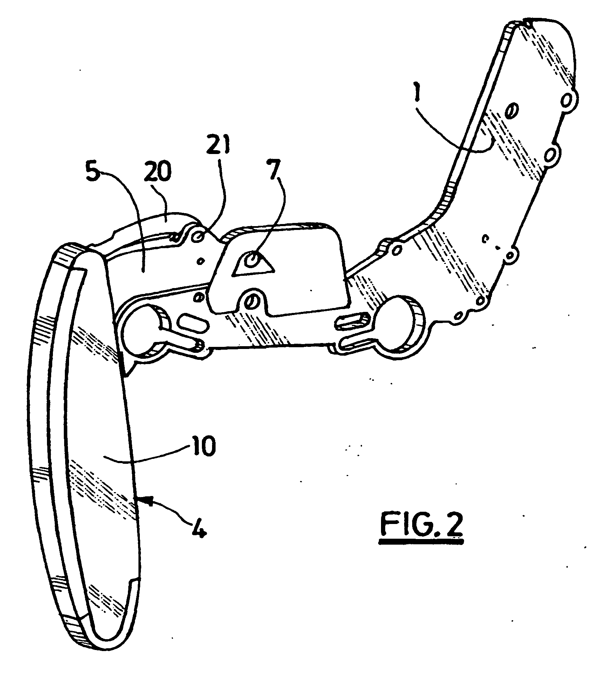

- la figure 2 est une vue similaire à la figure 1 avec l'accoudoir verrouillé en position escamotée ;

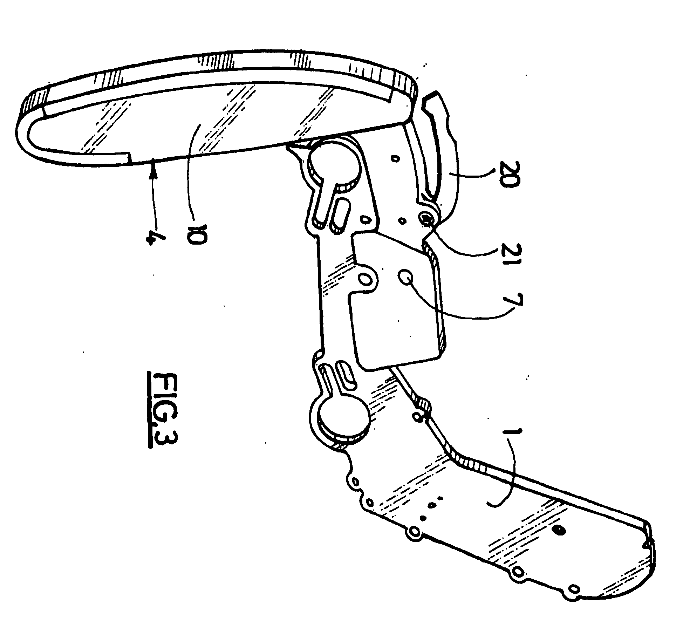

- la figure 3 est une vue similaire à la figure 2 avec l'accoudoir déverrouillé ;
- la figure 4 est une vue en coupe longitudinale de l'accoudoir verrouillé en position d'utilisation ;
- la figure 5 est une vue en coupe longitudinale de l'accoudoir verrouillé en position escamotée ;
- la figure 6 est une vue en perspective arrachée à plus grande échelle des moyens de verrouillage de l'accoudoir en position d'utilisation ; et
- la figure 7 est une vue similaire à la figure 6 des moyens de verrouillage de l'accoudoir en position escamotée.

On voit aux figures un élément 1 de structure de support de siège d'avion. Cette structure supporte de façon connue l'assise et le dossier du siège.

Un accoudoir 2, monté sur l'élément de structure 1 est composé pour l'essentiel d'un montant 3 et d'un élément d'appui 4.

Le montant 3 est en forme générale de L et est composé d'un premier et d'un deuxième bras solidaires 5 et 6 respectivement.

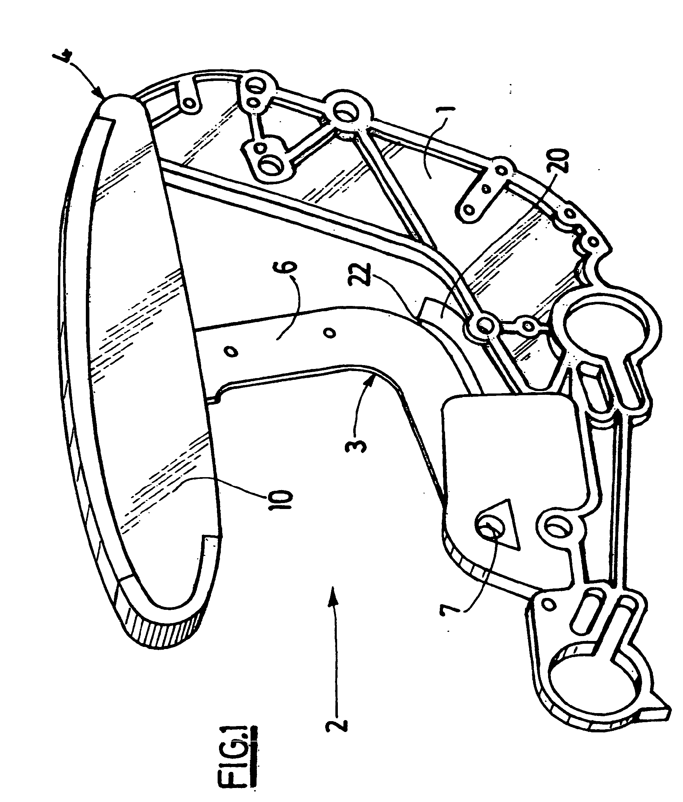

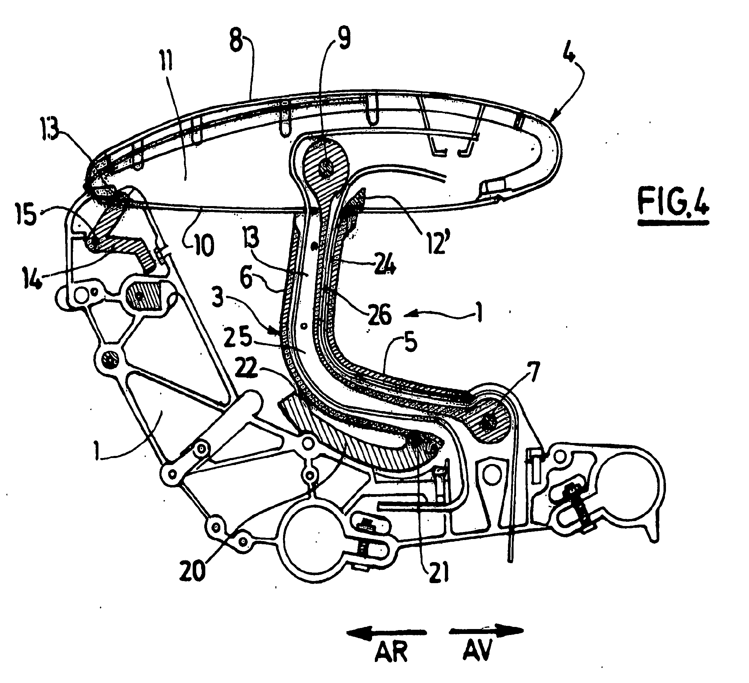

Le montant 3 est articulé par l'extrémité du bras 5 opposé au bras 6 sur l'élément de structure 1 autour d'un axe transversal 7. Lorsque l'accoudoir 2 est dans sa position d'utilisation représentée aux figures 1 et 4, le bras 5 est sensiblement horizontal et orienté vers l'arrière à partir de l'axe 7. Dans cette position, le bras 6 s'étend sensiblement verticalement vers le haut.

Lorsque l'accoudoir 2 est basculé vers l'avant autour l'axe 7 en position escamotée, le bras 5 s'étend sensiblement horizontalement vers l'avant à partir de l'axe 7 et le bras 6 s'étend sensiblement verticalement vers le bas.

L'élément d'appui 4 doté de son coussin 8 est articulé à l'extrémité libre du bras 6 autour d'un deuxième axe transversal 9.

L'élément d'appui 4 comporte deux flasques latéraux 10 délimitant entre eux un logement 11 à l'arrière de l'élément.

Lorsque l'accoudoir est en position d'utilisation, l'élément d'appui 4 est généralement horizontal perpendiculaire au bras 6 du montant 3. Lorsque l'élément d'appui 4 est en position escamotée, il est généralement vertical à l'avant de l'élément de structure 1, le bras 6 venant alors prendre place à l'intérieur du logement 11. Dans cette position, la partie avant de l'élément d'appui 4 est engagée dans un logement 12 solidaire de la structure de support.

On décrira maintenant les moyens permettant de verrouiller l'accoudoir dans sa position d'utilisation et dans sa position escamotée.

Une butée réglable 12' est montée sur l'élément d'appui 4 de manière à bloquer le degré de liberté de pivotement de cet élément par rapport au montant 3 autour de l'axe 9 lorsque l'accoudoir est en position d'utilisation. Le degré de liberté de pivotement de l'ensemble de l'accoudoir autour de l'axe 7 est ensuite bloqué par les moyens qui vont maintenant être décrits.

La butée 12', étant réglable, permet de régler la hauteur de l'élément d'appui 4 lorsqu'il est en utilisation.

L'élément d'appui 4 comprend, entre ses deux flasques 10, à l'arrière du logement 11, un doigt transversal 13.

Un premier levier de verrouillage 14 est monté sur l'élément de structure 1 articulé autour d'un troisième axe transversal 15.

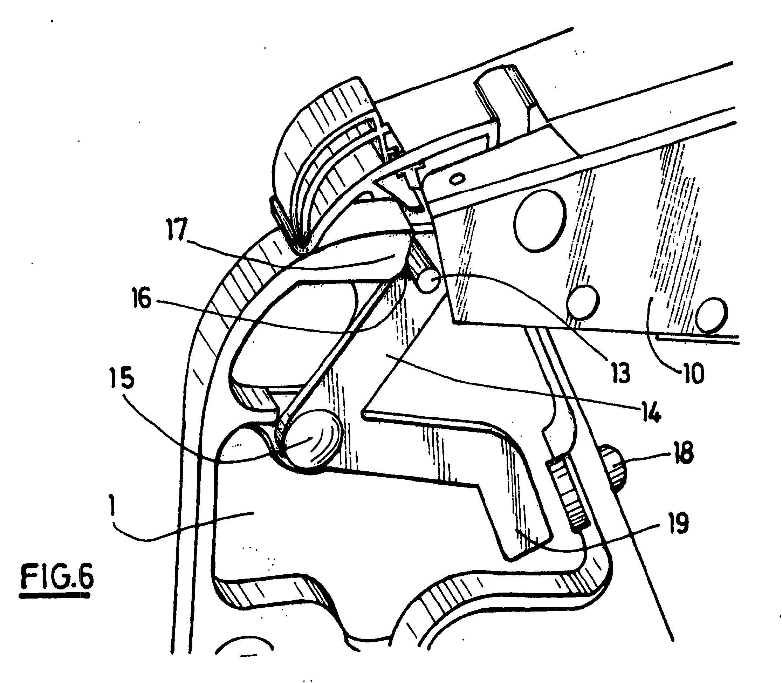

Le levier 14 comporte à son extrémité une encoche 16 en forme de crochet susceptible de coopérer avec le doigt 13. On voit à la figure 6 que, lorsque l'accoudoir est en position d'utilisation, le doigt 13 est engagé dans l'encoche 16 et bloqué entre les parois de cette encoche et une partie 17 de l'élément de structure 1. Des moyens élastiques (non représentés) maintiennent le levier 14 dans la position de la figure 6.

Un bouton de déverrouillage 18 est monté coulissant dans l'élément de structure 1 en vis-à-vis d'une saillie 19 du levier 14. Le déverrouillage de la position d'utilisation de l'accoudoir 2 s'effectue en appuyant sur le bouton 18 de manière à faire pivoter le levier 14 contre l'action des moyens élastiques, et ainsi à libérer le doigt 13.

On décrira maintenant les moyens de verrouillage de l'accoudoir 2 en position escamotée.

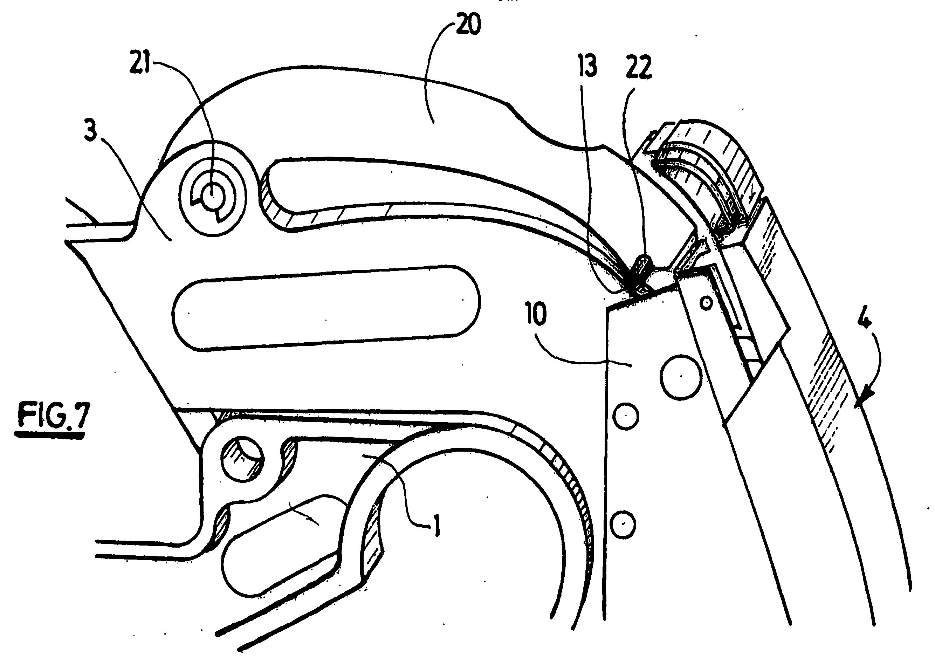

On voit notamment à la figure 7 qu'un deuxième levier 20 est articulé sur le bras 5 du montant 3 autour d'un quatrième axe transversal 21.

Le levier 20 est généralement horizontal tant dans la position d'utilisation de l'accoudoir que dans sa position escamotée. Lorsque l'accoudoir est dans sa position escamotée, le levier 20 est dirigé vers l'avant par rapport à l'axe 21.

Le levier 20 comporte à son extrémité libre un renfoncement 22 dans lequel le doigt 13 vient en butée lorsque l'accoudoir est dans sa position escamotée. Des moyens élastiques (non représentés) contraignent le levier 20 dans cette position de butée. Comme d'autre part, lorsque l'accoudoir est dans cette position, l'extrémité avant de l'élément d'appui 4 est engagée dans le logement 12, l'accoudoir ne peut pivoter dans son ensemble autour de l'axe 7 et est donc verrouillé dans cette position.

Le déverrouillage à partir de la position escamotée s'effectue en appuyant sur le levier 20 contre l'action des moyens élastiques de manière à libérer le doigt 13 et à désolidariser le montant 3 de l'élément d'appui 4.

On observera en dernier lieu que l'on peut éventuellement se dispenser du levier 20 et ne conserver alors que le logement 12 pour limiter le mouvement de l'accoudoir lorsqu'il est dans sa position escamotée.

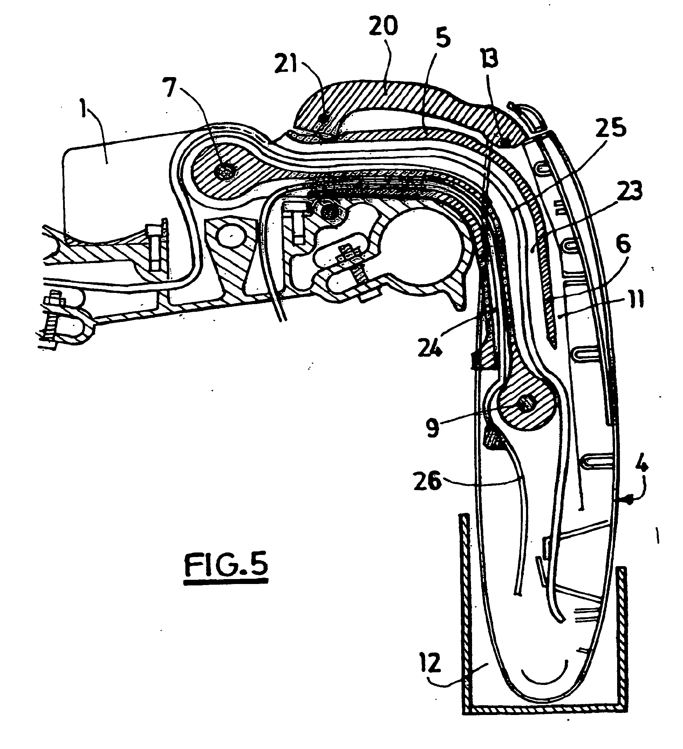

On voit par ailleurs sur les figures 4 et 5 que des passages 23 et 24 sont ménagés dans le montant 3. Le passage 23 reçoit des câbles électriques de commande 25 et le passage 24 reçoit un câble mécanique de commande 26.

## Revendications

1. Siège pour véhicule de transport, notamment aérien, comportant une structure de support (1) et au moins un accoudoir (2) comprenant un élément d'appui (4) monté à une extrémité d'un montant (3) dont l'autre extrémité est articulée autour d'un premier axe transversal (7) sur la structure de support entre une position d'utilisation où l'élément d'appui est sensiblement horizontal et une position escamotée vers l'avant où l'élément d'appui est généralement vertical en avant du siège, **caractérisé par le fait que** ledit montant est en forme de L avec un premier bras (5) articulé à son extrémité libre sur ledit premier axe et généralement dirigé, lorsque ledit montant est dans sa position d'utilisation, vers l'arrière à partir dudit premier axe et, lorsque ledit montant est dans sa position escamotée, vers l'avant à partir dudit premier axe, et un deuxième bras (6) généralement dirigé, lorsque le montant est dans sa position d'utilisation, vers le haut et, lorsque le montant est dans sa position escamotée, vers le bas, et que ledit élément d'appui est articulé à l'extrémité libre dudit deuxième bras du montant autour d'un deuxième axe transversal (9).

2. Siège selon la revendication 1, dans lequel ledit élément d'appui possède un logement (11) en arrière dudit deuxième axe, apte à recevoir ledit deuxième bras lorsque ledit montant est dans sa position escamotée.

3. Siège selon l'une quelconque des revendications 1 et 2, comportant de premiers moyens (13, 14) de verrouillage de l'accoudoir au moins dans la position d'utilisation dudit montant.

4. Siège selon la revendication 3, dans lequel lesdits premiers moyens de verrouillage comprennent des moyens de verrouillage de la partie arrière de l'élément d'appui à ladite structure de support.

5. Siège selon la revendication 4, dans lequel lesdits moyens de verrouillage de la partie arrière de l'élément d'appui à ladite structure de support comprennent un doigt transversal (13) monté à l'extrémité arrière dudit élément d'appui, et agencé pour coopérer avec une extrémité en forme de crochet (16) d'un premier levier (14) articulé sur ladite structure de support autour d'un troisième axe transversal (15).

6. Siège selon la revendication 5, comportant un bouton de déverrouillage (18) monté mobile sur ladite structure de support pour déplacer ledit premier levier.

7. Siège selon l'une quelconque des revendications 1 à 6, comportant de seconds moyens (13, 20) de verrouillage de l'accoudoir au moins dans la position escamotée dudit montant.

8. Siège selon la revendication 7, dans lequel lesdits seconds moyens de verrouillage comprennent des moyens de verrouillage dudit élément d'appui sur ledit montant et des moyens de blocage (12) de la rotation de l'accoudoir ainsi verrouillé autour dudit premier axe transversal.

9. Siège selon la revendication 8, dans lequel lesdits moyens de blocage comprennent un logement pour l'extrémité avant dudit élément d'appui, solidaire de ladite structure de support.

10. Siège selon l'ensemble de la revendication 5 et de l'une quelconque des revendications 7 à 9, dans lequel lesdits seconds moyens de verrouillage comprennent un deuxième levier (20) articulé sur ledit premier bras dudit montant autour d'un quatrième axe transversal (21) et comportant à son extrémité libre un évidemment (22) agencé pour coopérer avec ledit doigt transversal.

11. Siège selon l'une quelconque des revendications 1 à 10, dans lequel ledit montant comporte des passages (23, 24) pour au moins un câble électrique (25) ou de commande mécanique (26).

12. Siège selon l'une quelconque des revendications 1 à 11, dans lequel une butée (12') est agencée pour bloquer, en position d'utilisation, la rotation de l'élément d'appui autour dudit deuxième axe transversal dans le sens dans le sens de la mise de l'accoudoir en position d'utilisation.

13. Siège selon la revendication 12, dans lequel ladite butée est réglable.

## Patentansprüche

1. Sitz für ein Transportfahrzeug, insbesondere ein Luftfahrzeug, der eine Trägerstruktur (1) und mindestens eine Armstütze (2) aufweist, die ein Abstützungselement (4) umfasst, das an einem Ende eines Pfostens (3) montiert ist, dessen anderes Ende gelenkig um eine erste Querachse (7) gelagert ist, auf der Trägerstruktur zwischen einer Einsatzposition, wo das Abstützungselement deutlich horizontal ist und eine nach vorne eingezogene Position, wo das Abstützungselement vorne auf dem Sitz im allgemeinen senkrecht ist, **dadurch gekennzeichnet, dass** der besagte Pfosten eine L-Form bildet mit einem ersten Arm (5), der an seinem freien Ende gelenkig auf der besagten ersten Achse gelagert ist und im allgemeinen, wenn der besagte Pfosten sich in seiner Einsatzposition befindet, durch die besagte erste Achse nach hinten ausgerichtet ist und, wenn sich der besagte Pfosten in seiner eingezogenen Position befindet, durch die besagte erste Achse nach vorne ausgerichtet ist und ein zweiter Arm (6), der, wenn sich der Pfosten in seiner Einsatzposition befindet, im allgemeinen nach oben gerichtet ist und wenn sich der Pfosten in seiner eingezogenen Position befindet, nach unten gerichtet ist und das besagte Abstützungselement am freien Ende des besagten zweiten Armes des Pfostens um eine zweite Querachse (9) herum gelenkig gelagert ist.

2. Sitz gemäß Anspruch 1, bei dem das besagte Abstützungselement eine Aufnahme (11) auf der Rückseite der besagten zweiten Achse besitzt, die den besagten zweiten Arm aufnehmen kann, wenn der besagte Pfosten sich in seiner eingezogenen Position befindet.

3. Sitz gemäß einem der Ansprüche 1 und 2, der erste Mittel (13, 14) zur Verriegelung der Armstütze hat, zumindest in der Einsatzposition des besagten Pfostens.

4. Sitz gemäß Anspruch 3, bei dem die besagten ersten Verriegelungsmittel wiederum Verriegelungsmittel der Rückseite des Abstützungselementes auf der besagten Trägerstruktur umfassen.

5. Sitz gemäß Anspruch 4, bei dem die besagten Verriegelungsmittel der Rückseite des Abstützungselementes auf der besagten Trägerstruktur einen Querfinger (13) umfassen, der an dem hinteren Ende des besagten Abstützungsmittel montiert ist und so angeordnet ist, um mit einem Ende in Hakenform (16) eines ersten Hebels (14), der auf der besagten Trägerstruktur um eine dritte Querachse (15) herum angeordnet ist, zusammen zu arbeiten.

6. Sitz gemäß Anspruch 5, der einen Entriegelungsknopf (18) umfasst, der beweglich auf der besagten Trägerstruktur zur Verschiebung des ersten Hebels montiert ist.

7. Sitz gemäß einem der Ansprüche 1 bis 6, der zweite Mittel (13, 20) zur Verriegelung der Armstütze umfasst, zumindest in der eingezogenen Position des besagten Pfostens.

8. Sitz gemäß Anspruch 7, bei dem die besagten zweiten Verriegelungsmittel wiederum Verriegelungsmittel des besagten Abstützungselementes auf dem besagten Pfosten umfassen und Mittel zur Blockierung (12) der Drehung der Armstütze, die auf diese Weise um die besagte erste Querachse herum verriegelt ist.

9. Sitz gemäß Anspruch 8, bei dem die besagten Blockierungsmittel eine Aufnahme für das vordere Ende des besagten Abstützungselementes umfassen, das fest mit der besagten Trägerstruktur verbunden ist.

10. Sitz gemäß dem gesamten Anspruch 5 und einem der Ansprüche 7 bis 9, bei dem die besagten zweiten Verriegelungsmittel einen zweiten Hebel (20) umfassen, der gelenkig auf dem besagten ersten Arm des besagten Pfostens gelagert ist, um eine vierte Querachse (21) herum und der an seinem freien Ende eine Aussparung (22) umfasst, die für die Zusammenarbeit mit dem besagten Querfinger angeordnet ist.

11. Sitz gemäß einem der Ansprüche 1 bis 10, bei dem der besagte Pfosten Durchgänge (23, 24) für mindestens ein elektrisches Kabel (25) oder zur mechanischen Steuerung (26) umfasst.

12. Sitz gemäß einem der Ansprüche 1 bis 11, bei dem ein Anschlag (12') angeordnet ist, um in der Einsatzposition die Drehung des Abstützungselementes um die besagte zweite Querachse in der Richtung der Anbringung der Armstütze in der Einsatzposition herum zu blockieren.

13. Sitz gemäß Anspruch 12, bei dem der besagte Anschlag verstellbar ist.

## Claims

1. Seat for a transport vehicle, particularly an aircraft, comprising a support structure (1) and at least one elbow rest (2) comprising a bearing element (4) mounted at one end of an strut (3), the other end of which is articulated about a first transverse axis (7) on the support structure between a working position in which the bearing element is approximately horizontal and a retracted forward position in which the bearing element is generally vertical in front of the seat, **characterised by** the fact that the said strut is an L shape with a first arm (5) articulated at its free end on the said first axis and is generally facing backwards from the said first axis when the said strut is in its working position, and forwards from the said first axis when the said strut is in its retracted position, and a second arm (6) generally facing upwards when the strut is in its working position, and downwards when the strut is in its retracted position, and that the said bearing element is articulated at the free end of the said second arm of the strut about a second transverse axis (9).

2. Seat according to claim 1, in which the said bearing element is provided with a housing (11) behind the said second axis, capable of holding the said second arm when the said strut is in its retracted position.

3. Seat according to either claim 1 or 2, comprising first means (13, 14) for locking the elbow rest in at least the working position of the said strut.

4. Seat according to claim 3, in which the said first locking means comprise means for locking the rear part of the bearing element to the said support structure.

5. Seat according to claim 4, in which the said means for locking the rear part of the bearing element to the said support structure comprise a transverse pin (13) mounted at the rear end of the said bearing element, and arranged to cooperate with a hook-shaped end (16) of a first lever (14) articulated on the said support structure about a third transverse axis (15).

6. Seat according to claim 5, comprising an unlocking button (18) mounted free to move on the said support structure to displace the said first lever.

7. Seat according to any one of claims 1 to 6, comprising second means (13, 20) for locking the elbow rest at least in the retracted position of the said strut.

8. Seat according to claim 7, in which the said second locking means comprise means for locking the said bearing element on the said strut and means (12) for preventing rotation of the elbow rest thus locked about the said first transverse axis.

9. Seat according to claim 8, in which the said fixing means comprise a housing for the forward end of the said bearing element, fixed to the said support structure.

10. Seat according to all of claim 5 and any one of claims 7 to 9, in which the said second locking means comprise a second lever (20) articulated on the said first arm of the said strut about a fourth transverse axis (21) and comprising a recess (22) at its free end arranged to cooperate with the said transverse pin.

11. Seat according to any one of claims 1 to 10, in which the said strut comprises passages (23, 24) for at least one electric cable (25) or mechanical control (26) cable.

12. Seat according to any one of claims 1 to 11, in which a stop (12') is arranged to prevent rotation of the bearing element, in the working position, about the said second transverse axis in the direction to bring the elbow rest into the working position.

13. Seat according to claim 12, in which the said stop is adjustable.
